# EUROPÄISCHE PATENTSCHRIFT

(11) **EP 0 973 408 B1**
(45) Veröffentlichungstag und Bekanntmachung des Hinweises auf die Patenterteilung: **14.11.2001**
(21) Anmeldenummer: 97935541.9
(22) Anmeldetag: 23.07.1997
(51) Int. Cl.: A23G 9/02

(54) **SPEISEEIS MIT WEICHEN BEIGABEN**
ICE CREAM WITH SOFT ADDED INGREDIENTS
GLACE ALIMENTAIRE CONTENANT DES ADDITIFS A CONSISTANCE MOELLEUSE

(30) Priorität: 01.04.1997 DE 19713505
(43) Veröffentlichungstag der Anmeldung: 26.01.2000
(73) Patentinhaber: TD Technology Development GmbH, 80331 München (DE)
(72) Erfinder: BEER, Richard, D-90451 Nürnberg (DE)
(74) Vertreter: Körber, Wolfhart, Dr. rer.nat.
(86) Internationale Anmeldenummer: EP9703994
(87) Internationale Veröffentlichungsnummer: WO9843490

(56) Entgegenhaltungen:
- EP-A- 0 431 703
- WO-A-97/04663
- GB-A- 2 052 241
- US-A- 2 651 575
- US-A- 5 333 802

## Beschreibung

Die vorliegende Erfindung betrifft Speiseeis, das weiche bzw. pastöse, stückchenförmige Beigaben enthält.

### Hintergrund der Erfindung

Weiche Beigaben in Speiseeis, wie beispielsweise Nougat, Pralinen, Schokolade, (ganze) Früchte oder Fruchtmaterial, müssen bestimmten geschmacklichen als auch optischen Anforderungen entsprechen.

So dürfen beispielsweise die in Speiseeis einzubringenden Früchte im wesentlichen nicht sauer sein, da sie andernfalls eine von Seiten des Konsumenten unerwünschte geschmackliche Veränderung des Speiseeis-Produktes hervorrufen. Um dies zu umgehen, wurde Fruchtmaterial gemäß im Stand der Technik bekannten Verfahren in Zuckerlösung eingelegt und die geschmacklichen Eigenschaften des eingesetzten Fruchtmaterials dem des Speiseeises angepaßt.

Die EP 0 431 703 offenbart diesbezüglich die Zubereitung von zum Einbringen in Nahrungsmitteln, wie beispielsweise Speiseeisprodukten, geeigneten Fruchtstückchen, wobei die Früchte entweder als Ganzes oder im zerkleinerten Zustand bei Temperaturen unter 50 °C luftgetrocknet und die getrockneten Früchte anschließend in ein zuckerhaltiges, wäßriges Medium eingebracht werden. Durch die Lufttrocknung sowie das daran anschließende Eintauchen in die Zuckerlösung wird eine Abnahme des Wassergehaltes der Früchte um bis zu 60 % bewirkt.

Darüber hinaus besteht bei weichen Beigaben das Problem, daß diese beim Einbringen in das Speiseeis während dessen Herstellungsprozesses zerdrückt werden. Um dies zu verhindern wurden beispielsweise in Speiseeis einzubringende Früchte gemäß im Stand der Technik bekannten Verfahren mit einer Geliermasse überzogen, um ihnen eine gewisse Formstabilität zu verleihen und die gelierten Früchte wurden dann mit Speiseeis umgeben.

So offenbart die DE-PS 27 25 262 C3 die Herstellung einer Gemischteiszubereitung, bei der eine gelierende Mischung aus Obst, Früchten und Calciumalginat oder Calcium-nieder-methoxypectat in eine Form dosiert und dann auf die noch im Gelieren begriffene Mischung unter Ausbildung einer Vertiefung ein Eiscremeanteil aufdosiert wird. Dieses Verfahren weist jedoch den Nachteil auf, daß die Früchte im Speiseeis in gelierter Form vorliegen und daß einzelne Fruchstückchen im Speiseeis nicht beliebig verteilt werden können.

In der US-A-2,651,575 ist ein Verfahren beschrieben, um weich verteilte Beigaben z.B. Fruchtstückchen in Speiseeis einzubringen. Die Fruchtstückchen sollen dabei im Endprodukt die gleiche Textur haben wie das Speiseeis selbst. Das bekannte Verfahren führt dazu, daß die in das Speiseeis einzubringenden weichen Beigaben bei Verzehrtemperatur im Eis häufig nicht formstabil vorliegen und beim Einbringen in das Eis ihre inhärente Farbe an die Umgebung abgeben, was zur Schlierenbildung im Endprodukt führt, die insbesondere bei Milcheis vom Gesichtspunkt des optischen Erscheinungsbildes her äußerst unerwünscht ist.

Bei Schokolade als Beigabe bestand darüber hinaus das Problem, daß diese bei der Verzehrtemperatur des Speiseeises nicht zu hart empfunden werden soll, was die Verwendung von bei Raumtemperatur flüssiger Schokolade bedingt. Diese läßt sich jedoch stückig nur äußerst schlecht in Speiseeis einbringen, da sie bei der Herstellungstemperatur von Speiseeis nicht ausreichend hart ist. Darüber hinaus gibt diese bei Einbringen in das Speiseeis ihre Farbe an die Umgebung ab, was zu der unerwünschten Schlierenbildung im Endprodukt führt.

Eine Aufgabe der vorliegenden Erfindung besteht daher darin, ein Speiseeis zur Verfügung zu stellen, bei dem weiche Beigaben formstabil in Speiseeis eingebracht werden können, die bei der Verzehrtemperatur des Speiseeises eine weiche bzw. cremige Konsistenz aufweisen und nicht als "eiskalt" empfunden werden.

### Ausführliche Beschreibung der Erfindung

Erfindungsgemäß wurde nun gefunden, daß die vorstehende Aufgabe durch ein Speiseeis gelöst wird, das durch ein Verfahren erhältlich ist, bei dem weiche Beigaben schnell auf eine Temperatur von unter etwa -70 °C gebracht werden, und die schockgefrorenen Beigaben in noch tiefgefrorenem Zustand in das herzustellende Speiseeis eingebracht werden.

Zur Durchführung des Verfahrens zum Erhalt des erfindungsgemäßen Produktes werden daher die in das Speiseis einzubringenden Beigaben schnell auf eine Temperatur unter etwa -70 °C gebracht, indem diese beispielsweise in eine kryogene Flüssigkeit eingebracht werden, wie in flüssigen Stickstoff oder in Kohlensäure. Flüssiger Stickstoff hat sich aufgrund seiner tiefen Temperatur als äußerst geeignet erwiesen und ist daher bevorzugt.

Als in Speiseeis einzubringende weiche Beigaben können beispielsweise Früchte bzw. jede Art von Fruchtzubereitungen, wie beispielsweise Marmelade oder Fruchtcocktail, oder
auch Schokoladen und Süßwaren, wie Nougat, Pralinen, Marzipan oder Trüffel verwendet werden. Es sollte jedoch klar sein, daß die in das Speiseeis einzubringenden weichen Beigaben nicht auf die vorstehend aufgeführten beschränkt sind. Der auf dem Gebiet der Speiseeisherstellung tätige Fachmann wird vielmehr aufgrund seines allgemeinen Fachwissens und der Konsumentennachfrage auch andere weiche Beigaben entsprechend auswählen.

Bei Fruchtmaterial werden Früchte oder ein Gemisch unterschiedlicher Früchte jeglicher geeignet erscheinenden Art als frische oder handelsübliche rollende, gefrorene Ware und gegebenenfalls anderweitiger Vorbereitung, wie Zerkleinern, in eine Zuckerlösung überführt, in der sie für eine ausreichende Zeitspanne belassen werden, so daß der in der Lösung enthaltene Zucker in die Früchte eindiffundieren kann. Der Vorgang des Belassenes in der Zuckerlösung wird im folgenden als Marinieren bezeichnet. Die für diesen Vorgang erforderliche Zeitspanne hängt von mehreren Faktoren ab, wie der Art und der Größe der Früchte bzw. Fruchtstückchen, der Dauer des Tauchvorganges in der Zuckerlösung, der Konzentration der Zuckerlösung sowie von deren Temperatur.

Es hat sich gezeigt, daß die Früchte bzw. Fruchtstückchen etwa 4 bis 72 Stunden, vorzugsweise 8 bis 16 Stunden in der Zuckerlösung belassen werden sollten.

Die Konzentration der Zuckerlösung sollte im Bereich von 40 - 80 %, bezogen auf das Gewicht der Zuckerlösung, liegen, wobei die eingesetzte Menge in Abhängigkeit von dem jeweils verwendeten Zucker variieren kann. Als in dem erfindungsgemäßen Verfahren zu verwendender Zucker kann jeder in der Lebensmittelindustrie zugelassene, zur Marinierung geeignete Zucker verwendet werden, wie beispielsweise Saccharose oder Invertzucker.

Bei Verwendung von Saccharose hat sich beispielsweise eine Konzentration von 40 - 60 % als besonders günstig erwiesen. Bei Invertzucker mit einem Verhältnis Glucose/Fructose/ Saccharose zu jeweils gleichen Teilen hat sich ein Temperaturbereich von 50 bis 75 % bewährt.

Die Temperatur der Zuckerlösung während des Marinierens sollte gewöhnlich im Bereich von 15 bis 50 °C liegen, wobei ein Bereich von 20 bis 40 °C bevorzugt ist.

Bei der Durchführung des Mariniervorgangs wird der Fachmann auf Grundlage seines allgemeinen Fachwissens und gegebenenfalls einfach durchzuführender Vorexperimente die für die jeweilige Frucht bzw. Fruchtgröße optimalen Bedingungen vorab bestimmen.

So kann beispielsweise auch der beim Marinieren in der Zuckerlösung anfallende Fruchtsaft durch Zuckerlösung ersetzt werden, damit die Konzentration des eingesetzten Zuckers während des gesamten Vorgangs annähernd gleich bleibt. Andererseits kann natürlich auch die Anfangskonzentration der Zuckerlösung entsprechend hoch gewählt werden, so daß die während des Mariniervorgangs sinkende Konzentration der Zuckerlösung immer noch in dem gewünschten Bereich verbleibt.

Die nach Entnahme noch außen an den Früchten anhaftende Zuckerlösung wird vorzugsweise abtropfen gelassen und kann nach Wunsch zur Wiederverwertung gesammelt und dem Mariniervorgang wieder zugeführt werden.

Die so vorbehandelten Früchte werden nun erfindungsgemäß schnell auf eine tiefe Temperatur von unter etwa -70°C gebracht, z.B. durch Einwerfen in ein Bad von flüssigem Stickstoff, wobei darauf geachtet wird, daß die Früchte oder Fruchtstücke einzeln und nicht aneinander klebend oder haftend schockgefroren werden. Es wird davon ausgegangen, daß dadurch eine schockartige Verfestigung der Fruchtstruktur durch ein sofortiges Kristallisieren des in der Frucht enthaltenen Wassers in sehr feinen Kristallen bewirkt wird, so daß der in den Früchten enthaltene Zucker nicht mehr austreten kann und die Integrität der Frucht erhalten bleibt.

Die so zubereitete Frucht wird dann gegebenenfalls zusammen mit anderen, in das Speiseeis einzubringenden Komponenten, wie Schokoladenstückchen, mit dem Speiseeis vermischt und dann in gewünschte Formen abgepackt.

Werden andere weiche Beigaben gewählt, wie Trüffel-Pralinen, Nougat oder dergleichen, so können diese nach Wunsch ohne Vorbehandlung auf eine Temperatur von unter etwa -70 °C schockgefroren werden, indem sie beispielsweise über eine Dosiereinrichtung direkt in flüssigen Stickstoff überführt werden. Nach Entnahme aus dem flüssigen Stickstoff werden die Beigaben in tiefgefrorenem Zustand direkt in den Herstellungs- bzw. Verarbeitungsprozeß des Speiseeises eingebracht und beispielsweise mit der Speiseeismasse einfach vermengt.

Hinsichtlich der Art, Konsistenz und Form des eingesetzten Speiseeises bestehen keine Beschränkungen und jedes denkbare Speiseeis kann verwendet werden.

Es wurde nun gefunden, daß die gemäß dem erfindungsgemäßen Verfahren in Speiseeis eingebrachten weichen Beigaben keinen Geschmacksverlust erlitten haben. Weiterhin wurde gefunden, daß die eingebrachten Beigaben im Endprodukt formstabil vorliegen und keine Farbe an das umgebende Speiseeismaterial abgegeben hatten. Durch entsprechendes Einstellen der Beschickungsmenge an erfindungsgemäß behandeltem weichem Material können in dem herzustellenden Speiseeis unterschiedliche Mengen an Beigaben, beliebig verteilt, eingearbeitet werden.

Weiterhin hat sich auch gezeigt, daß das so zubereitete weiche Material beim Verzehr mit dem Speiseeis bei dessen Verzehrtemperatur unerwarteterweise auch eine weiche und/oder cremige Konsistenz besitzt, was für zuvor schockgefrorene Produkte nicht zu erwarten war. So weisen die nach dem erfindungsgemäßen Verfahren eingebrachten marinierten Früchte eine weiche natürlich empfundene Konsistenz auf. Eine solche Konsistenz war bisher nur mit durch vorher mit Geliermittel behandelten Früchten erzielbar mit dem Nachteil, erkennbar Gelierfrüchte im Speiseeis zu haben.

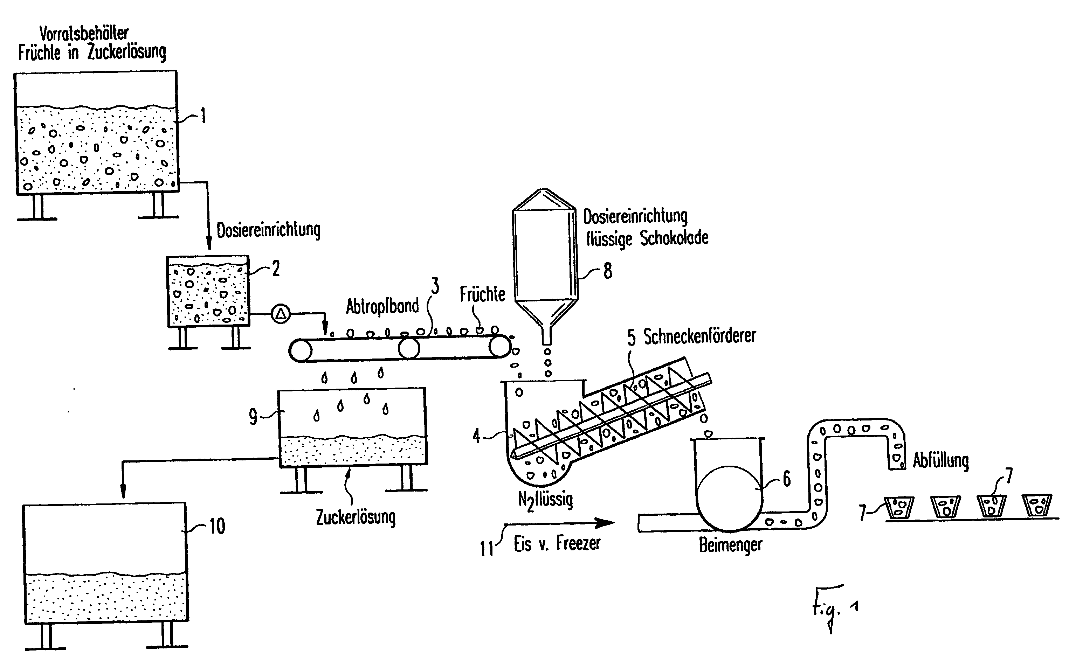

Als besonders vorteilhaft hat sich folgende Vorgehensweise erwiesen, die anhand der beiliegenden Zeichnung näher erläutert wird:

Die für eine vorbestimmte Zeitspanne in der Zuckerlösung belassenen Früchte werden von der Mariniervorrichtung 1, gegebenenfalls über eine Dosiervorrichtung 2, über ein geeignetes Beförderungsmittel 3, wie beispielsweise einem engmaschigen Endlosband, auf dem die Früchte während des Transports gleichzeitig abtropfen können, zu einem mit flüssigem Stickstoff gefüllten Behälter 4 überführt, in den sie von dem Endlosband hineinfallen können. In dem mit Stickstoff gefüllten Behälter 4 befindet sich ein zweckmäßig angebrachtes Beförderungsmittel 5, beispielsweise ein Schneckenförderer, mit dem in dem Stickstoff-Bad enthaltene Feststoffe in Form der schockgefrorenen Beigaben aus dem Bad heraustransportiert werden können. Die mit diesem Beförderungsmittel 5 aus dem Stickstoff-Bad entnommenen gefrorenen Früchte können dann mittels bekannter Vorrichtungen, beispielsweise einem dem nicht dargestellten Freezer nachgeordneten Beimenger 6, unmittelbar mit dem durch den Pfeil 11 angedeuteten Speiseeisstrom jeglicher Art vermischt und in geeignete Behälter 7 abgefüllt werden.

In das Stickstoff-Bad können auch andere, in Speiseeis-Produkten gewünschte Beigaben, die nicht vorbehandelt, beispielsweise mariniert, werden müssen, direkt eingebracht werden. So ergibt ein Hineintropfen von beispielsweise flüssiger Schokolade in das Stickstoff-Bad aus einer Dosiervorrichtung 8 kleine Schokoladenkügelchen, die dann zusammen mit den gefrorenen Früchten über das Beförderungsmittel 5 aus dem Bad herausgebracht werden und dann gegebenenfalls zusammen mit den gefrorenen Früchten oder alleine in die Speiseeisprodukte eingearbeitet werden können.

Die auf dem Endlosband abgetropfte Zuckerlösung kann in einem geeigneten Behälter 9 gesammelt und zur Wiederverwertung in einem weiteren Behälter 10 gelagert werden.

Die folgenden Beispiele erläutert die Erfindung ohne sie zu begrenzen.

### Beispiel 1

### Marinierte Früchte

Erdbeeren werden geviertelt und für 7 Stunden bei Raumtemperatur in einer Zuckerlösung mariniert (Zucker: Saccharose, Konzentration 45 %). Die so behandelten Erdbeerstückchen werden dann auf ein engmaschiges Endlosband überführt, auf dem sie abtropfen gelassen werden und in einen Behälter mit flüssigem Stickstoff überführt, in dem ein Schneckenförderer angeordnet ist. Nach einer Verweilzeit der Erdbeerstückchen im Stickstoff-Bad von ca. 25 Sekunden werden die nun schockgefrorenen Erdbeerstückchen werden mittels des Schneckenförderers aus dem flüssigen Stickstoff-Bad heraustransportiert und direkt mit einem Speiseeis-Strom aus Vanille-Eis vermengt. Das so erhaltene Speiseeis-Produkt wird entsprechend der Packungsgröße dosiert und abgefüllt.

Die in dem Produkt enthaltenen Erdbeerstückchen sind in dem Eis formstabil, ohne Verdrückungen, in statistischer Verteilung enthalten. Das die Erdbeeren umgebende Speiseeis weist keine Verfärbung auf und die Erdbeerstückchen besitzen bei Verzehrtemperatur eine weiche Konsistenz.

### Beispiel 2

Belgische Trüffel, die als pastöse Masse vorliegt, wird portionsweise dosiert direkt in einen Behälter mit flüssigem Stickstoff überführt und, wie in Beispiel 1, mit einem Schneckenförderer heraustransportiert und mit einem Speiseeis-Strom (Schokoladen-Eis) vermengt. Der so erhaltene Speiseeis-Strom wird entsprechend der Packungsgröße dosiert und abgefüllt.

Die in dem Speiseeis enthaltenen Trüffelmassen liegen formstabil, statistisch verteilt vor und weisen bei Verzehrtemperatur eine weiche und leicht abschmelzende Konsistenz auf und werden nicht als "eiskalt" empfunden.

### Beispiel 3

Bei Raumtemperatur flüssige Schokolade wird durch eine Dosiervorrichtung in ein Bad aus flüssigem Stickstoff tropfen gelassen und die gefrorenen Schokoladen-Tropfen werden, wie in Beispiel 1, über einen Schneckenförderer heraustransportiert und mit einem Strom aus Speiseeis (Geschmacksrichtung: Nuß) vermischt. Der so erhaltene Speiseeis-Strom wird entsprechend der Packungsgröße dosiert und abgefüllt.

Die in dem Speiseeis enthaltenen Schokoladen-Stückchen liegen in dem Speiseeis statistisch verteilt vor, weisen bei Verzehrtemperatur eine weiche Konsistenz auf und werden wie übliche, bei Raumtemperatur verzehrte Schokolade empfunden.

## Patentansprüche

1. Verfahren zur Herstellung von Speiseeis mit beliebig darin verteilten, weichen Beigaben, bei dem
die Beigaben schnell auf eine Temperatur von unter etwa -70 °C gebracht werden, und
die Beigaben in noch tiefgefrorenem Zustand in das herzustellende Speiseeis eingebracht werden.

2. Verfahren nach Anspruch 1, bei dem die weichen Beigaben zum schnellen Abkühlen in eine kryogene Flüssigkeit eingebracht werden.

3. Verfahren nach Anspruch 2, bei dem die kryogene Flüssigkeit Stickstoff oder Kohlensäure ist.

4. Verfahren nach einem der vorhergehenden Ansprüche, bei dem die Beigaben ausgewählt werden aus der Gruppe bestehend aus Früchten, Fruchtmaterial, Schokoladenprodukten, Nougat, Pralinen, Marzipan oder einem Gemisch davon.

5. Verfahren nach Anspruch 4, bei dem die Beigabe Früchte sind, die für eine Zeitspanne von 4 bis 72 Stunden in eine Zuckerlösung eingelegt wurden.

6. Verfahren nach Anspruch 5, bei dem die Konzentration der Zuckerlösung 40 - 80% beträgt.

7. Verfahren nach Anspruch 5, bei dem die Temperatur der Zuckerlösung 15 - 50 °C beträgt.

8. Verwendung von nach einem der vorhergehenden Ansprüchen vorbereiteten weichen Beigaben bei der Herstellung von Speiseeis.

9. Speiseeis mit Beigaben, in welchem die eingebrachten, weichen Beigaben formstabil und ohne Farbe an das umgebende Speiseeismaterial abgegeben zu haben vorliegen, hergestellt nach dem Verfahren entsprechend einem der Ansprüche 1 bis 7.

## Claims

1. Method for the production of ice cream with soft additional ingredients arbitrarily distributed therein, **characterised in that**,
the additional ingredients are rapidly brought to a temperature of below about -70°C, and
the additional ingredients are added to the ice cream to be produced still in deep frozen condition.

2. Method according to claim 1, **characterised in that**, for rapid cooling, the soft additional ingredients are introduced into a cryogenic liquid.

3. Method according to claim 2, **characterised in that** the cryogenic liquid is nitrogen or carbon dioxide.

4. Method according to any preceding claim, **characterised in that** the additional ingredients are selected from the group consisting of fruits, fruit material, chocolate products, nougat, pralines, marzipan or a mixture thereof.

5. Method according to claim 4, **characterised in that** the additional ingredients are fruits which are placed in sugar solution or a time period of 4 to 72 hours.

6. Method according to claim 5, **characterised in that** the concentration of the sugar solution is 40-80%.

7. Method according to claim 5, **characterised in that** the temperature of the sugar solution is 15-50°C.

8. Use of a soft additional ingredient prepared in accordance with any preceding claim in the production of ice cream.

9. Ice cream with additional ingredients, in which the introduced soft additional ingredients are present with stability of shape and without having leaked colour to the surrounding ice cream material, produced in accordance with the method of any of claims 1 to 7.

## Revendications

1. Procédé pour préparer une glace alimentaire dans laquelle sont répartis à volonté des additifs mous, selon lequel
les additifs sont amenés rapidement à une température inférieure à environ -70°C, et
les additifs sont introduits à l'état encore congelés dans la glace alimentaire à préparer.

2. Procédé selon la revendication 1, selon lequel les additifs mous sont insérés, pour un refroidissement rapide, dans un liquide cryogénique.

3. Procédé selon la revendication 2, selon lequel le liquide cryogénique est de l'azote ou du gaz carbonique.

4. Procédé selon l'une des revendications précédentes, selon lequel les additifs sont choisis parmi le groupe comprenant des fruits, de la chair de fruits, des produits chocolatés, du nougat, des pralines, de la pâte d'amande ou un mélange de ces substances.

5. Procédé selon la revendication 4, selon lequel les additifs sont des fruits, qui ont été placés pendant un intervalle de temps de 4 à 72 heures dans une solution de sucre.

6. Procédé selon la revendication 5, selon lequel la concentration de la solution de sucre est égale à 40-80 %.

7. Procédé selon la revendication 5, selon lequel la température de la solution de sucre est égale à 15-50°C.

8. Utilisation selon l'une des revendications précédentes d'additifs mous préparés, lors de la fabrication de glace alimentaire.

9. Glace alimentaire comportant des additifs, dans laquelle les additifs mous insérés sont présents sous une forme stable et sans qu'il faille délivrer une couleur à la glace alimentaire enveloppante, préparée conformément au procédé selon l'une des revendications 1 à 7.
